# EUROPÄISCHE PATENTSCHRIFT

(11) **EP 3 603 338 B1**
(45) Veröffentlichungstag und Bekanntmachung des Hinweises auf die Patenterteilung: **27.11.2024**
(21) Anmeldenummer: 18718198.7
(22) Anmeldetag: 12.03.2018
(51) Int. Cl.: H05B 6/12

(54) **HAUSHALTSGERÄTEVORRICHTUNG**
HOME APPLIANCE DEVICE
DISPOSITIF POUR APPAREIL MÉNAGER

(30) Priorität: 30.03.2017 ES 201730496
(43) Veröffentlichungstag der Anmeldung: 05.02.2020
(73) Patentinhaber: BSH Hausgeräte GmbH, 81739 München (DE)
(72) Erfinder: DIEZ ESTEBAN, Cristina, 50017 Zaragoza (ES); HERNANDEZ BLASCO, Pablo Jesus, 50019 Zaragoza (ES); KOGIAS, Georgios, 56626 Thessaloniki (GR); LLORENTE GIL, Sergio, 50009 Zaragoza (ES); LOPE MORATILLA, Ignacio, 50010 Zaragoza (ES); MOYA ALBERTIN, Maria Elena, 50002 Zaragoza (ES); STERGIOU, Charalampos, 54249 Thessaloniki (GR); TSAKALOUDI, Vasiliki, 54641 Thessaloniki (GR); ZASPALIS, Vassilios, 57010 Thessaloniki (GR)
(86) Internationale Anmeldenummer: PCT/IB2018/051617
(87) Internationale Veröffentlichungsnummer: WO 2018/178787

(56) Entgegenhaltungen:
- EP-A1- 2 048 914
- EP-A2- 0 158 353
- EP-B1- 2 048 914
- WO-A1-2017/009809
- ES-A2- 2 434 856
- JP-A- S60 230 394
- JP-U- S56 166 694
- US-A1- 2009 084 777

## Beschreibung

Die Erfindung betrifft eine Haushaltsgerätevorrichtung nach dem Oberbegriff des Anspruchs 1 und ein Verfahren zu einer Herstellung eines Ferritelements für eine Haushaltsgerätevorrichtung nach dem Anspruch 8.

Aus dem Stand der Technik ist bereits eine Haushaltsgerätevorrichtung mit zumindest einem Ferritelement bekannt, welches zu einer Bündelung eines von einer Spule bereitgestellten magnetischen Flusses vorgesehen ist. Das Ferritelement besteht aus einem Anteil an MnO, einem Anteil an ZnO und einem Anteil an Fe₂O₃ und wird als MnZn-Ferritelement bezeichnet. Weitere Materialien sind in dem Ferritelement nicht enthalten.

Ferner offenbaren die Druckschriften EP 0 158 353 A2 und JP S60 230394 A jeweils ein Ferritelement, deren Materialzusammensetzung aus einer Mischung verschiedener Ferrite besteht. Hierbei sind den beiden genannten Druckschriften jeweils Stoffmengenanteile hinsichtlich der unterschiedlichen Stoffe des Ferritelements zu entnehmen.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale der Ansprüche 1 und 8 gelöst, während vorteilhafte Ausgestaltungen und Weiterbildungen der Erfindung den Unteransprüchen entnommen werden können.

Die Erfindung geht aus von einer Haushaltsgerätevorrichtung, insbesondere von einer Gargerätevorrichtung und vorteilhaft von einer Kochfeldvorrichtung, mit zumindest einem Ferritelement, welches zu einer Bündelung eines von einer Spule bereitgestellten magnetischen Flusses vorgesehen ist und welches zumindest einen Anteil an MnO aufweist, wobei das Ferritelement zumindest einen Anteil an NiO aufweist, wodurch eine Effizienz, insbesondere eine Heizeffizienz, verbessert werden kann. Insbesondere kann eine hohe Leistungsfähigkeit, insbesondere des Ferritelements und vorteilhaft zusätzlich eines die Haushaltsgerätevorrichtung aufweisenden Haushaltsgeräts, erreicht werden, und zwar vorteilhaft während eines Garprozesses. Insbesondere kann ein Garprozess lange Zeit unter Vermeidung jeglicher Anpassungen, welche insbesondere zu einem Schutz von Gargerätekomponenten und/oder zu einer Sicherstellung eines sicheren Arbeitsbereichs von Gargerätekomponenten nötig sein könnten, aufrechterhalten werden. Bei hohen Temperaturen können insbesondere geringe Leistungsverluste erzielt werden, und zwar insbesondere geringere Leistungsverluste als bei einem MnZn-Ferritelement, welches insbesondere aus einem Anteil an MnO, einem Anteil an ZnO und einem Anteil an Fe₂O₃ besteht. Insbesondere kann durch den Anteil an NiO eine vorteilhaft hohe Curie-Temperatur des Ferritelements ermöglicht werden, welche insbesondere größer ist als eine von einem MnZn-Ferritelement, welches insbesondere aus einem Anteil an MnO, einem Anteil an ZnO und einem Anteil an Fe₂O₃ besteht, bekannte Curie-Temperatur.

Unter einer "Haushaltsgerätevorrichtung", insbesondere unter einer "Gargerätevorrichtung", vorteilhaft unter einer "Kochfeldvorrichtung" und besonders vorteilhaft unter einer "Induktionskochfeldvorrichtung" soll insbesondere zumindest ein Teil, insbesondere eine Unterbaugruppe, eines Haushaltsgeräts, insbesondere eines Gargeräts, vorteilhaft eines Kochfelds und besonders vorteilhaft eines Induktionskochfelds, verstanden werden. Beispielsweise könnte es sich bei einem die Haushaltsgerätevorrichtung aufweisenden Haushaltsgerät um eine Kühltruhe und vorteilhaft um einen Kühl- und/oder Gefrierschrank handeln. Ein die Haushaltsgerätevorrichtung aufweisendes Haushaltsgerät könnte alternativ oder zusätzlich beispielsweise eine Spülmaschine und/oder eine Waschmaschine und/oder ein Trockner sein. Vorteilhaft handelt es sich bei einem die Haushaltsgerätevorrichtung aufweisenden Haushaltsgerät um ein Gargerät. Ein als Gargerät ausgebildetes Haushaltsgerät könnte beispielsweise ein Backofen und/oder eine Mikrowelle und/oder ein Grillgerät und/oder ein Dampfgargerät sein. Vorteilhaft ist ein als Gargerät ausgebildetes Haushaltsgerät ein Kochfeld und vorzugsweise ein Induktionskochfeld.

Unter einem "Ferritelement" soll insbesondere ein Element verstanden werden, welches wenigstens zu einem Großteil aus Ferriten besteht. Unter "Ferriten" sollen insbesondere ferromagnetische und/oder ferrimagnetische keramische Werkstoffe verstanden werden. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Insbesondere ist das Ferritelement dazu vorgesehen, eine Kopplung zwischen der Spule und zumindest einem aufgestellten Gargeschirr, welches in einer Einbaulage insbesondere wenigstens teilweise oberhalb der Spule angeordnet ist, zu verbessern. Das Ferritelement ist insbesondere dazu vorgesehen, einen von der Spule bereitgestellten magnetischen Fluss insbesondere wesentlich zu verstärken und damit insbesondere in dem Gargeschirr, insbesondere in einem Gargeschirrboden des Gargeschirrs, induzierte Wärmeverluste zu verstärken und/oder zu erhöhen, und zwar insbesondere in einem Vergleich zu einer Ausgestaltung unter Vermeidung eines Ferritelements. Insbesondere ist das Ferritelement dazu vorgesehen, zumindest einen Ort gegen einen von der Spule bereitgestellten magnetischen Fluss wenigstens teilweise abzuschirmen. Das Ferritelement ist insbesondere dazu vorgesehen, von der Spule bereitgestellte Streufelder zu minimieren.

Die Haushaltsgerätevorrichtung weist insbesondere die Spule auf. Insbesondere weist die Spule zumindest eine Induktionsheizleitung auf. Unter einer "Spule" soll insbesondere ein induktives Bauelement mit zumindest einer insbesondere bestimmten Induktivität verstanden werden. Insbesondere ist die Spule wenigstens im Wesentlichen in Form einer Scheibe, insbesondere in Form einer Kreisscheibe, alternativ in Form eines Ovals oder eines Rechtecks, ausgebildet. Insbesondere weist die Spule mindestens fünf, insbesondere mindestens zehn, vorteilhaft mindestens fünfzehn und bevorzugt mindestens zwanzig Wicklungen der Induktionsheizleitung auf. Beispielsweise könnten Wicklungen zumindest eines Spulenabschnitts in mehreren Ebenen angeordnet sein. Vorzugsweise sind Wicklungen zumindest eines Spulenabschnitts in einer Ebene angeordnet.

Unter der Wendung, dass ein Objekt zumindest einen "Anteil an" einem weiteren Objekt aufweist, soll insbesondere verstanden werden, dass das Objekt zu einem Massenanteil und/oder Volumenanteil von mehr als 0 % aus dem weiteren Objekt besteht. Bei MnO handelt es sich insbesondere um Mangan(II)-oxid. Das Ferritelement weist insbesondere einen Massenanteil und/oder Volumenanteil von mindestens 5 %, insbesondere von mindestens 10 %, vorteilhaft von mindestens 15 % und vorzugsweise von mindestens 20 % an MnO auf. Insbesondere weist das Ferritelement einen Massenanteil und/oder Volumenanteil von maximal 40 %, insbesondere von maximal 35 %, vorteilhaft von maximal 30 % und vorzugsweise von maximal 25 % an MnO auf. Bei NiO handelt es sich insbesondere um Nickel(II)-oxid.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnte die Spule als eine Drossel ausgebildet sein. Vorzugsweise weist die Haushaltsgerätevorrichtung die Spule auf, welche als ein Induktionsheizelement ausgebildet ist. Die als Induktionsheizelement ausgebildete Spule ist insbesondere dazu vorgesehen, ein elektromagnetisches Wechselfeld insbesondere mit einer Frequenz von 20 kHz bis 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Dadurch kann insbesondere eine optimierte Beheizung von aufgestelltem Gargeschirr ermöglicht werden.

Das Ferritelement weist einen Massenanteil und insbesondere Volumenanteil von mindestens 0,5 %, insbesondere von mindestens 1 %, vorteilhaft von mindestens 1,5 %, besonders vorteilhaft von mindestens 2 % und vorzugsweise von mindestens 2,5 % an NiO auf, wodurch insbesondere eine verbesserte Leistungsfähigkeit erzielt werden kann.

Das Ferritelement weist einen Massenanteil und insbesondere Volumenanteil von maximal 10 %, insbesondere von maximal 8 %, vorteilhaft von maximal 7 %, besonders vorteilhaft von maximal 6 % und vorzugsweise von maximal 5 % an NiO auf, wodurch insbesondere ein zu hoher Anteil an NiO und/oder eine Umkehr eines durch den Anteil von NiO bewirkten positiven Effekts auf die Leistungsfähigkeit vermieden werden kann.

Ferner wird vorgeschlagen, dass das Ferritelement zumindest einen Anteil an ZnO aufweist. Das Ferritelement weist insbesondere einen Massenanteil und/oder Volumenanteil von mindestens 2 %, insbesondere von mindestens 3 %, vorteilhaft von mindestens 4 % und vorzugsweise von mindestens 5 % an ZnO auf. Insbesondere weist das Ferritelement einen Massenanteil und/oder Volumenanteil von maximal 20 %, insbesondere von maximal 15 %, vorteilhaft von maximal 10 % und vorzugsweise von maximal 8 % an ZnO auf. Bei ZnO handelt es sich insbesondere um Zinkoxid. Dadurch kann insbesondere eine preisgünstige Ausgestaltung erzielt werden.

Zudem wird vorgeschlagen, dass das Ferritelement zumindest einen Anteil an Fe₂O₃ aufweist. Das Ferritelement weist insbesondere einen Massenanteil und/oder Volumenanteil von mindestens 50 %, insbesondere von mindestens 55 %, vorteilhaft von mindestens 60 % und vorzugsweise von mindestens 65 % an Fe₂O₃ auf. Insbesondere weist das Ferritelement einen Massenanteil und/oder Volumenanteil von maximal 90 %, insbesondere von maximal 85 %, vorteilhaft von maximal 80 % und vorzugsweise von maximal 75 % an Fe₂O₃ auf. Bei Fe₂O₃ handelt es sich insbesondere um Eisen(III)-oxid. Dadurch kann insbesondere eine preisgünstige Ausgestaltung erzielt werden.

Weiterhin wird vorgeschlagen, dass das Ferritelement eine Curie-Temperatur von mindestens 250°C, insbesondere von mindestens 260°C, vorteilhaft von mindestens 270°C, besonders vorteilhaft von mindestens 280°C und vorzugsweise von mindestens 290°C aufweist, wodurch insbesondere ein Garprozess mit besonders hohen Temperaturen durchgeführt und/oder ermöglicht werden kann. Insbesondere kann eine hohe Funktionstauglichkeit selbst bei hohen Temperaturen gewährleistet werden.

Ferner wird vorgeschlagen, dass das Ferritelement eine Anfangs-Permeabilität von mindestens 3000, insbesondere von mindestens 3200, vorteilhaft von mindestens 3400, besonders vorteilhaft von mindestens 3600 und vorzugsweise von mindestens 3800 aufweist, und zwar insbesondere bei einer Frequenz von wenigstens im Wesentlichen 10 KHz und insbesondere bei einem magnetischen Fluss von wenigstens im Wesentlichen 0,1 mT und insbesondere bei einer Temperatur in einem Bereich von 180°C bis 200°C. Die Anfangs-Permeabilität des Ferritelements ist insbesondere eine Permeabilität vor einem insbesondere erstmaligen Magnetisieren des Ferritelements. Unter "wenigstens im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Dadurch kann ein von der Spule bereitgestellter magnetischer Fluss insbesondere besonders stark verstärkt werden, wodurch zu einer Erzeugung derselben Wärme in einem Gargeschirrboden eines aufgestellten Gargeschirrs insbesondere ein geringerer magnetischer Fluss erzeugt werden muss als bei einer Ausgestaltung mit einem Ferritelement mit einer geringeren Anfangs-Permeabilität.

Insbesondere weist das Ferritelement eine Sättigungsflussdichte von mindestens 150 mT, insbesondere von mindestens 200 mT, vorteilhaft von mindestens 250 mT und vorzugsweise von mindestens 300 mT auf, und zwar insbesondere bei einer Frequenz von wenigstens im Wesentlichen 10 KHz und insbesondere bei einer magnetischen Feldstärke von wenigstens im Wesentlichen 1200 A/m und insbesondere bei einer Temperatur von wenigstens im Wesentlichen 200°C.

Das Ferritelement ist insbesondere dazu vorgesehen, Leistungsverluste von maximal 150 mW/cm³, insbesondere von maximal 120 mW/cm³, vorteilhaft von maximal 100 mW/cm³, besonders vorteilhaft von maximal 80 mW/cm³ und vorzugsweise von maximal 65 mW/cm³ zu bewirken, und zwar insbesondere bei einer Frequenz von wenigstens im Wesentlichen 20 KHz und insbesondere bei einem magnetischen Fluss von wenigstens im Wesentlichen 200 mT und insbesondere bei einer Temperatur von wenigstens im Wesentlichen 200°C. Insbesondere ist das Ferritelement dazu vorgesehen, maximale Leistungsverluste bei einer Temperatur von wenigstens im Wesentlichen 190°C zu bewirken.

Eine besonders hohe Leistungsfähigkeit kann insbesondere erreicht werden durch ein Verfahren zu einer Herstellung einer Haushaltsgerätevorrichtung mit zumindest einem Ferritelement, welches zu einer Bündelung eines von einer Spule bereitgestellten magnetischen Flusses vorgesehen ist und welches zumindest einen Anteil an MnO, zumindest einen Anteil an ZnO und zumindest einen Anteil an NiO aufweist, wobei ein Verhältnis von Mn zu Zn mit variierendem Anteil an NiO wenigstens im Wesentlichen und insbesondere vollständig konstant gehalten wird. Mit steigendem Anteil an NiO werden die Anteile an MnO und ZnO in gleichem Maße reduziert. Insbesondere wird bei einer Veränderung eines Anteils an NiO ein Quotient aus dem Anteil an MnO und dem Anteil an ZnO wenigstens im Wesentlichen und insbesondere vollständig konstant gehalten.

Die Haushaltsgerätevorrichtung soll hierbei nicht auf die oben beschriebene Anwendung und Ausführungsform beschränkt sein. Insbesondere kann die Haushaltsgerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Haushaltsgerät mit einer Haushaltsgerätevorrichtung in einer schematischen Draufsicht und
- Fig. 2: eine als Induktionsheizelement ausgebildete Spule und fünf Ferritelemente der Haushaltsgerätevorrichtung in einer schematischen Ansicht von unten auf die Spule.

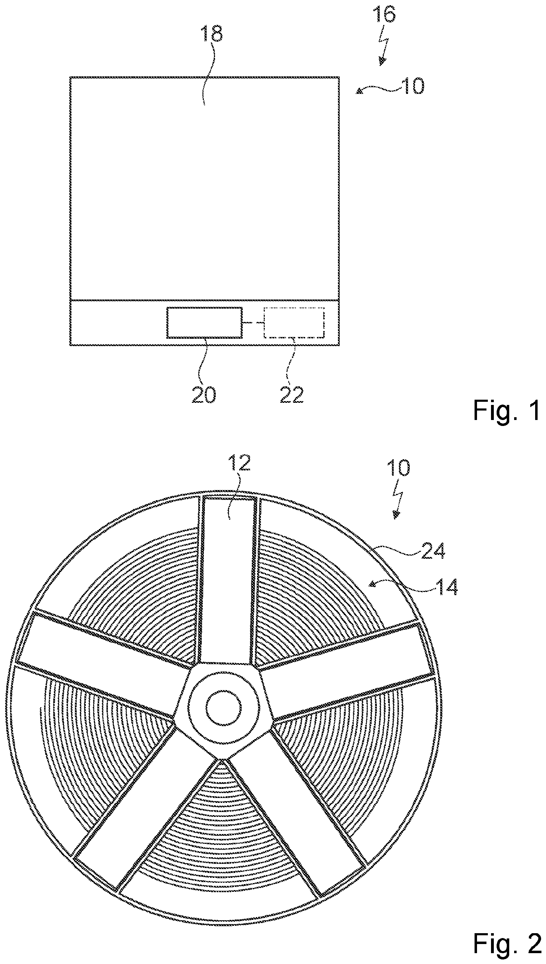

Fig. 1 zeigt ein Haushaltsgerät 16 mit einer Haushaltsgerätevorrichtung 10. Das Haushaltsgerät 16 könnte beispielsweise als ein Kühlschrank und/oder als eine Waschmaschine ausgebildet sein. Im vorliegenden Ausführungsbeispiel ist das Haushaltsgerät 16 als ein Gargerät, insbesondere als ein Induktionsgargerät, ausgebildet. Beispielsweise könnte das Haushaltsgerät 16 als ein Backofen, insbesondere als ein Induktionsbackofen, und/oder als ein Herd, insbesondere als ein Induktionsherd, und/oder als ein Garofen, insbesondere als ein Induktionsgarofen, ausgebildet sein. Das Haushaltsgerät 16 ist als ein Kochfeld, insbesondere als ein Induktionskochfeld, ausgebildet. Die Haushaltsgerätevorrichtung 10 ist im vorliegenden Ausführungsbeispiel als eine Gargerätevorrichtung, insbesondere als eine Induktionsgargerätevorrichtung, ausgebildet. Die Haushaltsgerätevorrichtung 10 ist als eine Kochfeldvorrichtung, insbesondere als eine Induktionskochfeldvorrichtung, ausgebildet.

Die Haushaltsgerätevorrichtung 10 weist eine Haushaltsgeräteplatte 18 auf. In einem montierten Zustand bildet die Haushaltsgeräteplatte 18 einen Teil eines Geräteaußengehäuses, insbesondere des Haushaltsgeräts 16, aus. Die Haushaltsgeräteplatte 18 bildet in einer Einbaulage einen einem Bediener zugewandten Teil des Geräteaußengehäuses aus. Die Haushaltsgeräteplatte 18 könnte beispielsweise als Frontplatte und/oder Deckplatte des Geräteaußengehäuses insbesondere eines als Backofen und/oder als Herd und/oder als Garofen und/oder als Kühlschrank und/oder als Waschmaschine ausgebildeten Haushaltsgeräts 16 ausgebildet sein. Im vorliegenden Ausführungsbeispiel ist die Haushaltsgeräteplatte 18 als eine Kochfeldplatte ausgebildet. In einem montierten Zustand ist die Haushaltsgeräteplatte 18 zu einem Aufstellen von Gargeschirr vorgesehen.

Die Haushaltsgerätevorrichtung 10 weist eine Bedienerschnittstelle 20 zu einer Eingabe und/oder Auswahl von Betriebsparametern (vgl. Fig. 1), beispielsweise einer Heizleistung und/oder einer Heizleistungsdichte und/oder einer Heizzone auf. Die Bedienerschnittstelle 20 ist zu einer Ausgabe eines Werts eines Betriebsparameters an einen Bediener vorgesehen. Beispielsweise könnte die Bedienerschnittstelle 20 den Wert des Betriebsparameters an einen Bediener optisch und/oder akustisch ausgeben.

Die Haushaltsgerätevorrichtung 10 weist eine Steuereinheit 22 auf. Die Steuereinheit 22 ist dazu vorgesehen, in Abhängigkeit von mittels der Bedienerschnittstelle 20 eingegebenen Betriebsparametern Aktionen auszuführen und/oder Einstellungen zu verändern.

Im vorliegenden Ausführungsbeispiel weist die Haushaltsgerätevorrichtung 10 mehrere Spulen 14 auf (vgl. Fig. 2). Von den Spulen 14 ist lediglich eine dargestellt. Beispielsweise könnte zumindest ein Teil der Spulen 14 in Form einer Matrix angeordnet sein. Alternativ oder zusätzlich könnte zumindest ein Teil der Spulen 14 jeweils eine eigenständige Heizzone ausbilden. Die Spulen 14 sind im Wesentlichen identisch ausgebildet, weshalb im Folgenden lediglich eine Spule 14 der Spulen 14 beschrieben wird.

Die Spule 14 ist als ein Induktionsheizelement ausgebildet. Die Spule 14 ist dazu vorgesehen, in einer Einbaulage auf der Haushaltsgeräteplatte 18 oberhalb der Spule 14 aufgestelltes Gargeschirr zu erhitzen. In einem Betriebszustand führt die Spule 14 aufgestelltem Gargeschirr Energie zu. Die Steuereinheit 22 regelt in einem Betriebszustand eine Energiezufuhr zu der Spule 14. In einer Einbaulage ist die Spule 14 unterhalb der Haushaltsgeräteplatte 18 angeordnet.

Die Haushaltsgerätevorrichtung 10 weist zumindest einen Spulenträger 24 auf (vgl. Fig. 2). Pro Spule 14 weist die Haushaltsgerätevorrichtung 10 genau einen Spulenträger 24 auf. Die Spule 14 ist in einer Einbaulage auf dem Spulenträger 24 angeordnet.

Im vorliegenden Ausführungsbeispiel weist die Haushaltsgerätevorrichtung 10, insbesondere für jede Spule 14, fünf Ferritelemente 12 auf (vgl. Fig. 2). Von mehrfach vorhandenen Objekten ist in den Figuren jeweils lediglich eines mit einem Bezugszeichen versehen. Alternativ könnte die Haushaltsgerätevorrichtung 10, insbesondere für jede Spule 14, eine geringere Anzahl Ferritelemente 12 aufweisen, wie beispielsweise zwei, insbesondere drei oder vorteilhaft vier Ferritelemente 12. Die Haushaltsgerätevorrichtung 10 könnte alternativ, insbesondere für jede Spule 14, eine größere Anzahl Ferritelemente 12 aufweisen, wie beispielsweise zumindest sechs, insbesondere zumindest acht und vorteilhaft zumindest zehn Ferritelemente 12. Die Ferritelemente 12 sind im Wesentlichen identisch ausgebildet, weshalb im Folgenden lediglich ein Ferritelement 12 der Ferritelemente 12 beschrieben wird.

In einem montierten Zustand ist das Ferritelement 12 an dem Spulenträger 24 angeordnet, insbesondere befestigt. Das Ferritelement 12 ist zu einer Bündelung eines von einer Spule 14 bereitgestellten magnetischen Flusses vorgesehen. In einer Einbaulage ist das Ferritelement 12 unterhalb der Spule 14 angeordnet.

Das Ferritelement 12 weist einen Anteil an MnO auf. Im vorliegenden Ausführungsbeispiel weist das Ferritelement 12 einen Anteil von im Wesentlichen 19,93 % MnO auf. Neben dem Anteil an MnO weist das Ferritelement 12 einen Anteil an NiO auf.

Es sind Ferritelemente 12 mit unterschiedlichen Anteilen an NiO denkbar. In nachfolgender Tabelle sind einige Beispiele von Ferritelementen 12 mit verschiedenen Anteilen an NiO zusammengefasst. Ein mit "F01" bezeichnetes Ferritelement 12 ist Stand der Technik und nicht erfindungsgemäß.

| | F01 | F01Ni08 | F01Ni16 | F01Ni24 | F01Ni32 | F01Ni40 | F01Ni48 |
|---|---|---|---|---|---|---|---|
| Fe₂O₃ [%] | 71,50 | 71,50 | 71,50 | 71,50 | 71,50 | 71,50 | 71,50 |
| MnO [%] | 22,45 | 21,82 | 21,19 | 20,56 | 19,93 | 19,30 | 18,67 |
| ZnO [%] | 6,05 | 5,88 | 5,71 | 5,54 | 5,37 | 5,20 | 5,03 |
| NiO [%] | 0,00 | 0,80 | 1,60 | 2,40 | 3,20 | 4,00 | 4,80 |
| Summe [%] | 100,00 | 100,00 | 100,00 | 100,00 | 100,00 | 100,00 | 100,00 |
| Mn/Zn | 3,71 | 3,71 | 3,71 | 3,71 | 3,71 | 3,71 | 3,71 |
| Fe/Mn | 3,18 | 3,28 | 3,37 | 3,48 | 3,59 | 3,71 | 3,83 |
| Curie-Temperatur [°C] | 250 | 260 | 270 | 280 | 290 | 300 | 310 |
| Sättigungsflussdichte [mT] | 242 | 256 | 279 | 292 | 306 | 318 | 329 |
| Leistungsverluste [mW/cm³] | 87 | 74 | 64 | 61 | 65 | 76 | 91 |
| Position der Leistungsverluste [°C] | 80 | 100 | 140 | 160 | 180 | 190 | 210 |
| Anfangs-Permeabilität | 3919 | 4090 | 3904 | 3968 | 3834 | 3512 | 3234 |

In Versuchsreihen, welche mit den in der Tabelle aufgeführten verschiedenen Ferritelementen 12 durchgeführt wurden, hat sich ein mit "F01Ni32" bezeichnetes Ferritelement 12 als besonders bevorzugt erwiesen. Dieses mit "F01Ni32" bezeichnete Ferritelement 12 wird im Folgenden beschrieben.

Das Ferritelement 12 weist im vorliegenden Ausführungsbeispiel einen Anteil, und zwar insbesondere einen Massenanteil und/oder Volumenanteil, von im Wesentlichen 3,2 % NiO auf. Neben dem Anteil an MnO und dem Anteil an NiO weist das Ferritelement 12 einen Anteil an ZnO auf. Im vorliegenden Ausführungsbeispiel weist das Ferritelement 12 einen Anteil von im Wesentlichen 5,37 % ZnO auf.

Das Ferritelement 12 weist, insbesondere neben dem Anteil an MnO, dem Anteil an ZnO und dem Anteil an NiO, einen Anteil an Fe₂O₃ auf. Im vorliegenden Ausführungsbeispiel weist das Ferritelement 12 einen Anteil von im Wesentlichen 71,50 % Fe₂O₃ auf.

Das Ferritelement 12 weist eine Curie-Temperatur von im Wesentlichen 290°C auf. Im vorliegenden Ausführungsbeispiel weist das Ferritelement 12 eine Sättigungsflussdichte von im Wesentlichen 306 mT auf, und zwar insbesondere bei einer Frequenz von im Wesentlichen 10 KHz und bei einer magnetischen Feldstärke von im Wesentlichen 1200 A/m und bei einer Temperatur von im Wesentlichen 200°C.

Das Ferritelement 12 ist dazu vorgesehen, Leistungsverluste von im Wesentlichen 65 mW/cm³ zu bewirken, und zwar insbesondere bei einer Frequenz von im Wesentlichen 20 KHz und bei einem magnetischen Fluss von im Wesentlichen 200 mT und bei einer Temperatur von im Wesentlichen 200°C. Das Ferritelement 12 ist dazu vorgesehen, maximale Leistungsverluste bei einer Temperatur von im Wesentlichen 180°C zu bewirken.

Im vorliegenden Ausführungsbeispiel weist das Ferritelement 12 eine Anfangs-Permeabilität von im Wesentlichen 3834 auf. In einem Verfahren zu einer Herstellung des Ferritelements 12 für die Haushaltsgerätevorrichtung 10 wird ein Verhältnis von Mn zu Zn mit variierendem Anteil an NiO im Wesentlichen konstant gehalten.

### Bezugszeichen

- 10: Haushaltsgerätevorrichtung
- 12: Ferritelement
- 14: Spule
- 16: Haushaltsgerät
- 18: Haushaltsgeräteplatte
- 20: Bedienerschnittstelle
- 22: Steuereinheit
- 24: Spulenträger

## Patentansprüche

1. Haushaltsgerätevorrichtung, insbesondere Kochfeldvorrichtung, mit zumindest einem Ferritelement (12), welches zu einer Bündelung eines von einer Spule (14) bereitgestellten magnetischen Flusses vorgesehen ist und welches zumindest einen Anteil an MnO aufweist, wobei das Ferritelement (12) zumindest einen Anteil an NiO aufweist, **dadurch gekennzeichnet, dass** das Ferritelement (12) einen Massenanteil von mindestens 0,5 % an NiO aufweist, wobei das Ferritelement (12) einen Massenanteil von maximal 10 % an NiO aufweist.

2. Haushaltsgerätevorrichtung nach Anspruch 1, **gekennzeichnet durch** die Spule (14), welche als ein Induktionsheizelement ausgebildet ist.

3. Haushaltsgerätevorrichtung nach einem der vorhergehenden Ansprüche,
**dadurch gekennzeichnet, dass** das Ferritelement (12) zumindest einen Anteil an ZnO aufweist.

4. Haushaltsgerätevorrichtung nach einem der vorhergehenden Ansprüche,
**dadurch gekennzeichnet, dass** das Ferritelement (12) zumindest einen Anteil an Fe₂O₃ aufweist.

5. Haushaltsgerätevorrichtung nach einem der vorhergehenden Ansprüche,
**dadurch gekennzeichnet, dass** das Ferritelement (12) eine Curie-Temperatur von mindestens 250°C aufweist.

6. Haushaltsgerätevorrichtung nach einem der vorhergehenden Ansprüche,
**dadurch gekennzeichnet, dass** das Ferritelement (12) eine Anfangs-Permeabilität von mindestens 3000 aufweist.

7. Haushaltsgerät, insbesondere Kochfeld, mit zumindest einer Haushaltsgerätevorrichtung (10) nach einem der vorhergehenden Ansprüche.

8. Verfahren zu einer Herstellung einer Haushaltsgerätevorrichtung (10) nach einem der Ansprüche 1 bis 6, mit zumindest einem Ferritelement (12), welches zu einer Bündelung eines von einer Spule (14) bereitgestellten magnetischen Flusses vorgesehen ist und welches zumindest einen Anteil an MnO, zumindest einen Anteil an ZnO und zumindest einen Anteil an NiO aufweist, **dadurch gekennzeichnet, dass** ein Verhältnis von Mn zu Zn mit variierendem Anteil an NiO wenigstens im Wesentlichen konstant gehalten wird, wobei mit steigendem Anteil an NiO die Anteile an MnO und ZnO in gleichem Maße reduziert werden, wobei das Ferritelement (12) einen Massenanteil von maximal 10 % an NiO aufweist.

## Claims

1. Household appliance device, in particular hob device, having at least one ferrite element (12), which is provided for concentrating a magnetic flux supplied by a coil (14), and which has at least one proportion of MnO, wherein the ferrite element (12) has at least one proportion of NiO, **characterised in that** the ferrite element (12) has a mass proportion of at least 0.5% of NiO, wherein the ferrite element (12) has a mass proportion of at most 10% of NiO.

2. Household appliance device according to claim 1, **characterised by** the coil (14), which is embodied as an induction heating element.

3. Household appliance device according to one of the preceding claims, **characterised in that** the ferrite element (12) has at least one proportion of ZnO.

4. Household appliance device according to one of the preceding claims, **characterised in that** the ferrite element (12) has at least one proportion of Fe₂O₃.

5. Household appliance device according to one of the preceding claims, **characterised in that** the ferrite element (12) has a Curie temperature of at least 250°C.

6. Household appliance device according to one of the preceding claims, **characterised in that** the ferrite element (12) has an initial permeability of at least 3000.

7. Household appliance, in particular hob, having at least one household appliance device (10) according to one of the preceding claims.

8. Method for producing a household appliance device (10), according to one of claims 1 to 6, having at least one ferrite element (12), which is provided for concentrating a magnetic flux supplied by a coil (14), and which has at least one proportion of MnO, at least one proportion of ZnO and at least one proportion of NiO, **characterised in that** a ratio of Mn to Zn with a varying proportion of NiO is kept at least essentially constant, wherein with an increasing proportion of NiO, the proportions of MnO and ZnO are reduced to the same degree, wherein the ferrite element (12) has a mass proportion of at most 10% of NiO.

## Revendications

1. Dispositif d'appareil électroménager, en particulier dispositif de champ de cuisson, avec au moins un élément en ferrite (12), prévu pour concentrer un flux magnétique mis à disposition par une bobine (14) et qui présente au moins une part de MnO, l'élément en ferrite (12) présentant au moins une part de NiO, **caractérisé en ce que** l'élément en ferrite (12) présente un pourcentage en masse d'au moins 0,5 % de NiO, l'élément en ferrite (12) présentant un pourcentage en masse d'au plus 10 % de NiO.

2. Dispositif d'appareil électroménager selon la revendication 1, **caractérisé par** la bobine (14), laquelle est formée sous la forme d'un élément chauffant à induction.

3. Dispositif d'appareil électroménager selon l'une des revendications précédentes, **caractérisé en ce que** l'élément en ferrite (12) présente au moins une part de ZnO.

4. Dispositif d'appareil électroménager selon l'une des revendications précédentes, **caractérisé en ce que** l'élément en ferrite (12) présente au moins une part de Fe₂O₃.

5. Dispositif d'appareil électroménager selon l'une des revendications précédentes, **caractérisé en ce que** l'élément en ferrite (12) présente une température de Curie d'au moins 250°C.

6. Dispositif d'appareil électroménager selon l'une des revendications précédentes, **caractérisé en ce que** l'élément en ferrite (12) présente une perméabilité initiale d'au moins 3000.

7. Appareil électroménager, en particulier champ de cuisson, avec au moins un dispositif d'appareil électroménager (10) selon l'une des revendications précédentes.

8. Procédé de fabrication d'un dispositif d'appareil électroménager (10) selon l'une des revendications 1 à 6, avec au moins un élément en ferrite (12) prévu pour concentrer un flux magnétique mis à disposition par une bobine (14) et qui comprend au moins une part de MnO, au moins une part de ZnO et au moins une part de NiO, **caractérisé en ce qu'**un rapport entre Mn et Zn est maintenu au moins essentiellement constant avec une part variable de NiO, les parts de MnO et de ZnO étant réduites dans la même mesure lorsque la part de NiO augmente, l'élément en ferrite (12) présentant un pourcentage en masse d'au plus 10 % de NiO.
